# FASCICULE DE BREVET EUROPEEN

(11) **EP 0 384 809 B1**
(45) Date de publication et mention de la délivrance du brevet: **15.09.1993**
(21) Numéro de dépôt: 90400415.7
(22) Date de dépôt: 15.02.1990
(51) Int. Cl.: G01N 23/227

(54) **Procédé et appareil pour contrôler la qualité cristallographique d'objets à structure monocristalline par génération de pseudo-lignes de Kikuchi en atmosphère ambiante**
Verfahren und Vorrichtung zur Prüfung der kristallographischen Qualität von Gegenständen mit einer Kristallstruktur durch Erregung von Kikuchi-Pseudolinien in einer Umgebungsatmosphäre
Process and apparatus for inspecting the crystallographic quality of objects with a monocrystalline structure by generation of Kikuchi pseudolines in a surrounding atmosphere

(30) Priorité: 24.02.1989 FR 8902409
(43) Date de publication de la demande: 29.08.1990
(73) Titulaire: TURBOMECA, Société dite:, F-64511 Bordes (FR)
(72) Inventeur: Meurtin, Michel, F-64110 Jurançon (FR)
(74) Mandataire: Barnay, André François

(56) Documents cités:
- US-A- 4 634 868
- PHYSICAL REVIEW B, vol. 15, no. 2, 15 janvier 1977, pages 666-671, US; R.J. BAIRD et al.: "Angular-dependent X-ray-photoelectron peak intensities from single-crystal gold"
- PHYS. STATUS SOLIDI A, vol. 44, no. 2, 16 décembre 1977, pages 485-497; DE; J. BEAUVILLAIN et al.: "Etude des diagrammes de pseudo-lignes de Kikuchi obtenues par une méthode d'observation en condenseur-objectif"
- L.S. BIRKS: "Electron probe microanalysis", 1963, pages 169-171, Interscience Publishers, Londres, GB
- PHYSICAL REVIEW B, vol. 35, no. 18, 15 juin 1987, pages 9859-9862, The American Physical Society; J. OSTERWALDER et al.: "X-ray photoelectron diffraction at high angular resolution"
- PATENT ABSTRACTS OF JAPAN, vol. 9, no. 44 (P-337), 23 février 1985, page 4 P 337; & JP-A-59 182 348

## Description

La présente invention est relative à un procédé et à un appareil pour détecter la présence de défauts dans des structures monocristallines.

Le procédé actuellement le plus utilisé pour effectuer un contrôle de qualité sur des structures monocristallines est le procédé LAUE. On connaît également des procédés par observation macrographique et micrographique.

Le procédé LAUE en retour est un procédé long et coûteux, nécessitant une préparation et une mise en oeuvre par des "tirs ponctuels" sur l'objet à examiner, ces tirs ne couvrant qu'une très faible surface d'environ 1 mm² et devant par conséquent être multipliés un grand nombre de fois, sous de nombreux angles différents, et sans pour autant couvrir la totalité de la surface de l'objet, laissant ainsi subsister une marge d'incertitude importante, tout en ne donnant que l'orientation cristallographique seule.

Il a déjà été proposé de déterminer la qualité cristallographique des structures monocristallines par une exploitation rationnelle de diagrammes composés de pseudo-lignes de Kikuchi.

Des exemples d'utilisation des pseudo-lignes de Kikuchi sont décrits dans les documents D1=L.S. BIRKS: "Electron probe microanalysis", 1963, pages 169-171, Interscience Publishers, Londres, GB, D2=PHYSICAL REVIEW B, vol. 15, n°2, 15 janvier 1977, pages 666-671, US; R.J. BAIRD et al.:"Angular-dependent X-ray-photoelectron peak intensities from single-crystal gold" et D3=PHYSICAL REVIEW B, vol. 35, n° 18, 15 juin 1987, pages 9859-9862, The American Physical Society; J.OSTERWALDER et al.:"X-ray photoelectron diffraction at high angular resolution".

Tous les procédés décrits dans ces documents, en vue d'obtenir des pseudo-lignes de Kikuchi, nécessitent de bombarder la structure monocristalline avec un faisceau d'électrons et de placer la structure monocristalline sous vide, les lignes de Kikuchi apparaissant par exemple sur un microscope électronique.

Ces procédés sont par conséquent inutilisables pour le contrôle d'objets de grandes dimensions ayant une structure monocristalline, tels que des aubes de turbines.

L'invention a en conséquence pour buts principaux de proposer :
- un procédé pour obtenir une image des pseudo-lignes de Kikushi d'une structure monocristalline en atmosphère ambiante ;
- un procédé de contrôle de qualité cristallographique d'objets de grande dimension à structures monocristallines par la mise en oeuvre dudit procédé ;
- un appareil pour la mise en oeuvre des procédés précités de production de pseudo-lignes de Kikuchi et de contrôle de qualité de structures monocristallines d'objets de grandes dimensions.

L'invention a pour objet à cet effet un procédé pour obtenir une image des pseudo-lignes de Kikuchi d'une structure monocristalline, caractérisé en ce qu'on bombarde ladite structure monocristalline, en atmosphère ambiante naturelle, avec un faisceau de photons.

les photons frappant les monocristaux de la structure engendrent des électrons qui rebondissent sur les plans réticulaires et produisent ainsi les pseudo-lignes de Kikuchi.

Suivant une autre caractéristique de l'invention, on irradie la structure monocristalline avec un faisceau polychromatique divergent de rayons X.

Suivant encore une autre caractéristique de l'invention, on utilise pour irradier ladite structure un générateur de rayons X de type connu, à microfoyer directionnel ou panoramique.

D'une façon avantageuse le diamètre dudit microfoyer est au plus de 100 µm.

Du fait qu'il se déroule en atmosphère libre, ce procédé peut être mis en oeuvre sur des objets de grandes dimensions.

Par voie de conséquence, l'invention a également pour objet un procédé de contrôle de qualité cristallographique d'objets de grandes dimensions, ayant une structure monocristalline, caractérisé en ce qu'on réalise un cliché agrandi d'un diagramme composé de pseudo-lignes de Kikuchi obtenues par la mise en oeuvre dudit procédé précité, et en ce qu'on analyse lesdites pseudo-lignes.

D'une façon avantageuse, on effectue une saisie vidéo de l'image du diagramme et un traitement de l'image par ordinateur au moyen d'un programme approprié.

L'invention a pour objet un appareil pour la mise en oeuvre desdits procédés, caractérisé en ce qu'il comprend un bâti sur lequel sont montés un générateur de rayons X à microfoyer, un ensemble comprenant en série un amplificateur de brillance, un appareil de prise de vues vidéo, et un support d'objet interposé entre le microfoyer et ledit amplificateur.

Suivant un mode de réalisation, l'appareil comprend en outre un support mobile coulissant perpendiculairement à l'axe optique dudit ensemble et adapté pour présenter un récepteur d'images devant celui-ci.

De préférence, l'appareil comprend en outre des moyens pour présenter automatiquement et successivement les objets à examiner devant ledit microfoyer.

Le récepteur d'images peut être un écran fluorescent, ou un film radiographique.

La description qui va suivre, en regard des dessins annexés à titre d'exemples non limitatifs, permettra de bien comprendre comment l'invention peut être mise en pratique.

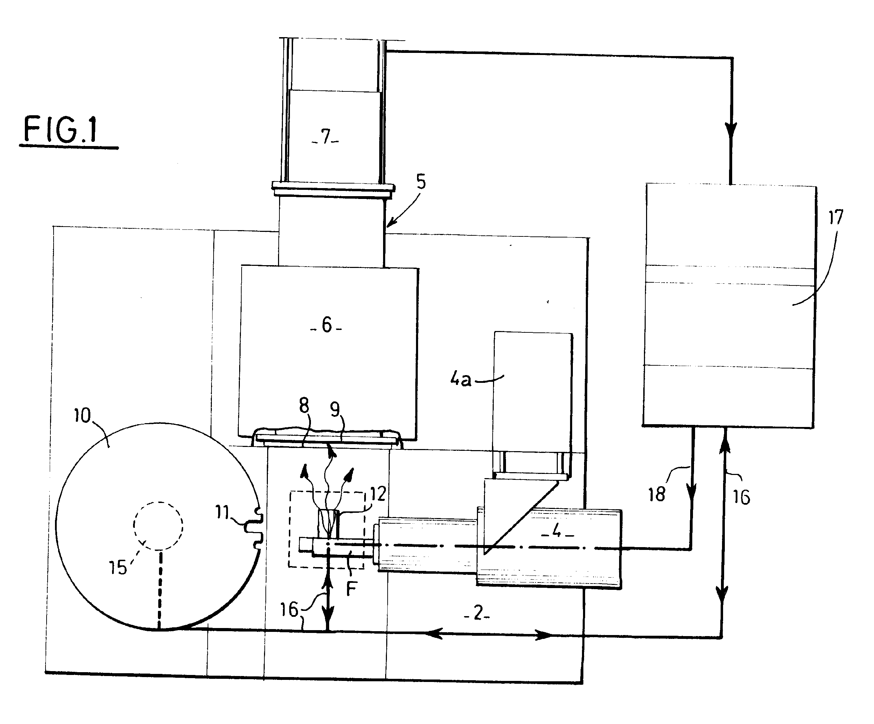

La figure 1 est une vue schématique en plan de l'appareil pour la mise en oeuvre du procédé suivant l'invention.

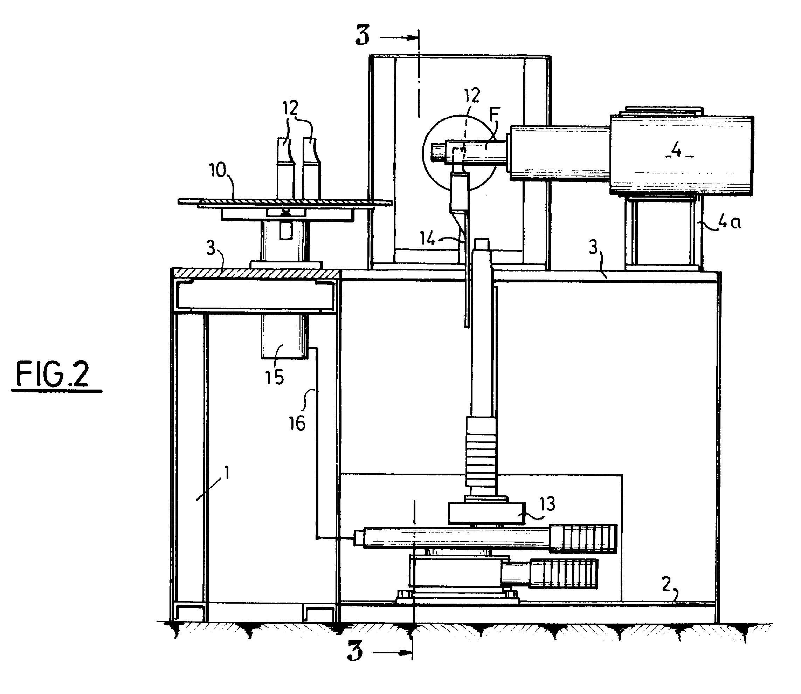

La figure 2 en est une vue schématique en élévation latérale.

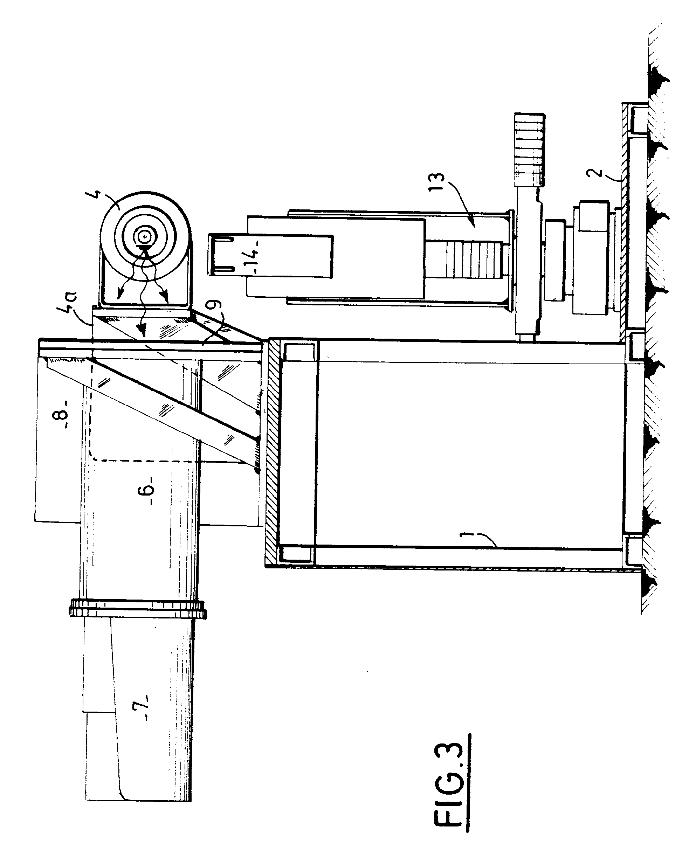

La figure 3 en est une vue en coupe suivant la ligne 3-3 de la-figure 2.

Suivant un mode de réalisation, l'appareil pour la mise en oeuvre des procédés suivant l'invention comprend un bâti 1 ayant une base 2 portant une table 3 de forme en L.

Sur l'une des branches de la table 3 est monté au moyen d'un support 4a un générateur 4 de rayons X, de type industriel, ayant un microfoyer F d'un diamètre plus petit que ou égal à 100 µm, émettant un rayonnement polychromatique d'énergie maximale comprise entre 10 et 160 KeV, avec une anticathode en tungstène.

Sur la même branche de la table 3 en face du microfoyer F, est disposé un ensemble désigné d'une façon générale par la référence 5 et comprenant, à partir du microfoyer F, un amplificateur de brillance 6 et un dispositif 7 de prise de vues vidéo, alignés axialement ensemble et avec ledit microfoyer.

Devant l'amplificateur 6 est disposé un support 8 coulissant latéralement, ou verticalement, adapté pour recevoir un écran fluorescent 9 et permettant d'interposer l'écran 9 entre l'amplificateur 6 et le foyer F.

Sur l'autre branche de la table 3 est monté un plateau rotatif indexable 10 comportant sur sa périphérie des moyens 11 adaptés pour recevoir de façon amovible des objets 12 dont la qualité cristallographique doit être contrôlée, par exemple des aubes de turbines à structure monocristalline.

Un appareil automatique 13 de type connu, par exemple un manipulateur, est monté sur la base 2, au-dessous de l'intervalle compris entre le microfoyer F et l'amplificateur 6. Cet appareil manipulateur comporte des moyens 14, aptes à saisir les objets 12 sur la périphérie du plateau 10, à les transférer devant le microfoyer F, à les orienter et à les remettre ensuite en place dans les moyens 11 du plateau.

Un tel appareil manipulateur étant bien connu dans la technique ne sera pas décrit plus en détails.

Il est enfin prévu des moyens, tels qu'un moteur pas à pas 15 pour indexer le plateau 10 angulairement en amenant successivement les moyens 11 du plateau au droit des moyens 14 du manipulateur.

Le moteur 15 est relié au manipulateur 13 et à un dispositif électronique 17 de commande et de pilotage par un conducteur 16, le dispositif 17 étant lui-même relié au générateur 4 par un conducteur 18.

L'appareil suivant l'invention fonctionne de la façon suivante :

Les objets à contrôler, par exemple des aubes 12 de turbine, sont disposés dans les moyens 11 du plateau indexable 10.

Le dispositif de commande électronique 17 actionne le manipulateur 13 qui prélève un objet 12 et l'amène dans une position fixe prédéterminée devant le microfoyer F.

L'écran 9 est amené devant l'amplificateur 6 et le générateur 4 est alimenté.

Les photons émis par le générateur frappent les cristaux de la structure monocristalline de l'objet 12 et sont diffractés de telle sorte qu'ils font apparaître sur l'écran 9 l'image d'un diagramme composé de pseudo-lignes de Kikuchi.

L'opérateur observe alors l'image sur l'écran, puis le manipulateur 13 oriente l'objet suivant un angle différent et l'opérateur observe la nouvelle image.

L'opérateur apprécie les images et s'il ne détecte pas de défauts il retire l'écran 9 et actionne l'ensemble 5 pour saisir les images des diagrammes, qui peuvent ensuite être traitées par ordinateur pour une exploitation précise des pseudo-lignes de Kikuchi, au moyen d'un logiciel approprié.

Le procédé et l'appareil suivant l'invention permettent d'obtenir une image radiographique diffractée de la totalité du profil de l'objet exposé au rayonnement du générateur, c'est-à-dire une image globale par opposition aux techniques classiques ponctuelles.

En outre, les résultats obtenus sont indépendants de la géométrie du profil de la pièce examinée et notamment de sa courbure, ce qui est particulièrement intéressant dans le cas des aubes de turbines, et permet de réduire à environ 3 minutes, au plus, le temps nécessaire au contrôle d'une aube de turbine.

## Revendications

1. Procédé pour obtenir une image des pseudo-lignes de Kikuchi d'une structure monocristalline, caractérisé en ce qu'on bombarde ladite structure monocristalline, en atmosphère ambiante naturelle, avec un faisceau de photons.

2. Procédé suivant la revendication 1, caractérisé en ce qu'on irradie la structure monocristalline avec un faisceau polychromatique divergent de rayons X.

3. Procédé suivant la revendication 2, caractérisé en ce qu'on utilise pour irradier ladite structure un générateur de rayons X de type connu, à microfoyer directionnel ou panoramique.

4. Procédé suivant la revendication 3, caractérisé en ce que le diamètre dudit microfoyer est au plus de 100 µm.

5. Procédé de contrôle de qualité cristallographique d'objets de grandes dimensions, ayant une structure monocristalline, caractérisé en ce qu'on réalise un cliché agrandi d'un diagramme composé de pseudo-lignes de Kikuchi obtenues par la mise en oeuvre du procédé défini suivant l'une quelconque des revendications 1 à 4.

6. Procédé suivant la revendication 5, caractérisé en qu'on effectue une saisie vidéo de l'image du diagramme et un traitement de l'image par ordinateur au moyen d'un programme approprié.

7. Appareil pour la mise en oeuvre du procédé tel que défini suivant les revendications 5 ou 6, caractérisé en ce qu'il comprend un bâti (1) sur lequel sont montés un générateur (4) de rayons X à microfoyer (F) , un ensemble comprenant en série un amplificateur de brillance (6) un appareil (7) de prise de vues vidéo et un support (8) d'objet interposé entre le microfoyer (F) et ledit amplificateur (6).

8. Appareil suivant la revendication 7, caractérisé en ce qu'il comprend en outre un support mobile coulissant (8) perpendiculairement à l'axe optique dudit ensemble et adapté pour présenter un récepteur d'images (9) devant celui-ci.

9. Appareil suivant l'une des revendications 7 et 8, caractérisé en ce qu'il comprend en outre des moyens (10, 13, 14, 15) pour présenter automatiquement et successivement les objets (12) à examiner devant ledit microfoyer (F).

10. Appareil suivant la revendication 8, caractérisé en ce que ledit récepteur d'images peut être un écran fluorescent, ou un film radiographique.

## Patentansprüche

1. Verfahren zur Herstellung eines Bildes von Kikuchi-Pseudolinien einer monokristallinen Struktur, dadurch gekennzeichnet, daß die von einer natürlichen Atmosphäre umgebene monokristalline Struktur mit einem Photonenstrahl beschossen wird.

2. Verfahren nach Anspruch 1, dadurch gekennzeichnet, daß die monokristalline Struktur mit einem polychromatischen, divergenten Röntgenstrahl bestrahlt wird.

3. Verfahren nach Anspruch 2, dadurch gekennzeichnet, daß zum Bestrahlen der Struktur ein Generator für Röntgenstrahlen in bekannter Ausführung verwendet wird, der einen gerichteten oder flächenhaften Mikrofokus aufweist.

4. Verfahren nach Anspruch 3, dadurch gekennzeichnet, daß der Durchmesser des Mikrofokus höchstens 0.10 mm beträgt.

5. Verfahren zur kristallographischen Qualitätskontrolle von Objekten mit großen Abmessungen und einer monokristallinen Struktur, dadurch gekennzeichnet, daß durch die Durchführung des durch einen der Ansprüche 1 bis 4 definierten Verfahrens eine vergrößerte Abbildung eines Diagramms, das aus Kikuchi-Pseudolinien zusammengesetzt ist, erreicht wird.

6. Verfahren nach Anspruch 5, dadurch gekennzeichnet, daß das Bild des Diagramms auf einem Videogerät aufgenommen wird und daß das Bild in einem Computer mit Hilfe eines geeigneten Programmes ausgewertet wird.

7. Vorrichtung zur Durchführung des nach den Ansprüchen 5 oder 6 definierten Verfahrens, dadurch gekennzeichnet, daß die Vorrichtung einen Rahmen (1) aufweist, auf dem ein Generator (4) für Röntgenstrahlen mit einem Mikrofokus (F) angebracht ist, sowie eine Baueinheit, die hintereinander einen Leuchtkraftverstärker (6), ein Videoaufnahmegerät (7) und eine Auflage (8) für Gegenstände aufweist, wobei die Auflage (8) zwischen dem Mikrofokus (F) und dem Leuchtkraftverstärker (6) angeordnet ist.

8. Vorrichtung nach Anspruch 7, dadurch gekennzeichnet, daß diese eine bewegliche Auflage (8) umfaßt, die senkrecht zur optischen Achse der Baueinheit verschiebbar ist und so ausgebildet ist, daß sie an ihrer Vorderseite einen Bildempfänger (9) aufweist.

9. Vorrichtung nach den Ansprüchen 7 und 8, dadurch gekennzeichnet, daß sie außerdem Einrichtungen (10, 13, 14, 15) zum automatischen, zeitlich aufeinander folgenden Anordnen von zu untersuchenden Objekten (12) vor dem Mikrofokus (F) aufweist.

10. Vorrichtung nach Anspruch 8, dadurch gekennzeichnet, daß der Bildempfänger als fluoreszierender Bildschirm oder Röntgenfilm ausgebildet sein kann.

## Claims

1. Process for obtaining a pseudo-Kikuchi line image of a monocrystalline structure characterised in that the said monocrystalline structure is bombarded in normal ambient atmosphere with a beam of photons.

2. Process according to claim 1 characterised in that the monocrystralline structure is irradiated with a divergent polychromatic beam of X-rays.

3. Process according to claim 2, characterised in that for irradiating the said structure there is used a known type of directional or panoramic micro-focus X-ray generator.

4. Process according to claim 3 characterised in that the diameter of the said micro-focus is at most 100µm.

5. Process for monitoring the crystallographic quality of objects of large dimensions having a monocrystalline structure characterised in that there is produced an enlarged image of a diagram composed of pseudo-Kikuchi lines obtained by carrying out the process defined according to any one of claims 1 to 4.

6. Process according to claim 5, characterised in that there is obtained a video representation of the image of the diagram and the image is treated by computer by means of an appropriate program.

7. Apparatus for carrying out the process such as defined according to claims 5 or 6 characterised in that it comprises a structure (1) on which are mounted a micro-focus (F) generator (4) of X-rays, an assembly comprising in series a brilliance amplifier (6) apparatus (7) for taking a video picture and a specimen support (8) interposed between the micro-focus (F) and the said amplifier (6).

8. Apparatus according to claim 7 characterised in that it further comprises a mobile support (8) sliding perpendicular to the optical axis of the said assembly and adapted to carry an image receiver (9) in front of it.

9. Apparatus according to one of claims 7 and 8 characterised in that it further comprises means (10, 13, 14, 15) for presenting objects (12) to be examined automatically and successively before the said micro-focus (F).

10. Apparatus according to claim 8 characterised in that the said image receiver could be a fluorescent screen or a radiographic film.
